# EUROPÄISCHE PATENTSCHRIFT

(11) **EP 0 791 739 B1**
(45) Veröffentlichungstag und Bekanntmachung des Hinweises auf die Patenterteilung: **22.08.2001**
(21) Anmeldenummer: 97101679.5
(22) Anmeldetag: 04.02.1997
(51) Int. Cl.: F02F 11/00

(54) **Verschlussdeckel, insbesondere für Motor- und Getriebegehäuse bei Kraftfahrzeugen**
Coverplate for an engine or drive casing of motor vehicles
Couvercle d'étanchéité pour la bâtiment d'un moteur ou dispositif d'entraînement pour un véhicule

(30) Priorität: 22.02.1996 DE 19606532
(43) Veröffentlichungstag der Anmeldung: 27.08.1997
(73) Patentinhaber: CR Elastomere GmbH, 51379 Leverkusen (DE)
(72) Erfinder: Bernd, Stephan, 42897 Remscheid-Lennep (DE); vom Stein, Hans-Joachim, 51377 Leverkusen (DE); Engelberth, Wolfgang, 51377 Leverkusen (DE)

(56) Entgegenhaltungen:
- EP-A- 0 264 547
- EP-A- 0 503 143
- FR-A- 2 349 735

## Beschreibung

Die vorliegende Erfindung betrifft eine Kombination eines Verschlußdeckels mit einem Gehäuse mit durch den Deckel sich erstreckender Welle, insbesondere für Motor- und Getriebegehäuse bei Kraftfahrzeugen, mit einer dynamisch wirkenden Dichtung für die Welle und einer statisch wirkenden Dichtung für die Deckelflanschfläche.

Solche Gehäuseverschlußdeckel sind bereits durch die DE 36 34 735 bekannt.

Wenn solche Gehäuseverschlußdeckel bei Motoren zum Einsatz kommen, bei denen sich im Bereich der Dichtfläche, d. h. im Bereich der Dichtstreifen oder außerhalb am Motorgehäuse Ausnehmungen oder Bohrungen, z. B. Zentrierbohrungen für den automatischen Zusammenbau der Motoren auf Montagestraßen vorgesehen sind, besteht die Gefahr, daß die statischen Dichtstreifen keine oder keine ausreichende Dichtwirkung erzielen können. Der verbleibende Steg ist zu schmal, um zwei Dichtlippen aufnehmen zu können. Eine einzelne Dichtlippe würde zur Abdichtung nicht ausreichen. In Praxis werden deshalb besondere Verschlußstopfen oder dgl. Vorgesehen.

Aus der EP-A 0 503 143 ist ein Gehäuseverschlußdeckel für einen Motor bekannt, mit dem Bohrungen in dem Gehäuse mit einer Haube aus elastomerem Material abgedeckt werden können. Die FR-A 2 349 735 offenbart in ähnlicher Weise einen Gehäuseverschlußdeckel, wobei an diesem Abdeckelemente für Gehäusebohrungen angeformt sind. Die aus den letzten beiden Schriften bekannten Abdeckelemente für Bohrungen im Gehäuse sind jedoch relativ aufwendig ausgeführt, so daß die Herstellkosten für derartige Verschlußdeckel hoch sind.

Die vorliegende Erfindung hat es sich deshalb zur Aufgabe gemacht, einen Gehäuseverschlußdeckel oder dgl. in wirtschaflicher Weise zu schaffen, der auch eine sichere Abdichtung von Motor und Getriebegehäusen gewährleistet, die solche Zentrierbohrungen oder dgl. aufweisen.

Gelöst wird diese Aufgabe nach der vorliegenden Erfindung dadurch, daß auf der dem Motorgehäuse oder dgl. zugewandten Seite des Gehäuseverschlußdeckels im Bereich der Bohrungen eine oder mehrere aus elastomerem Werkstoff bestehende Auflagen vorgesehen sind, die über den Verschlußdeckel vorstehen, wobei die Auflage auf der Rückseite einen Ansatz aufweist, der durch eine entsprechende Ausnehmung oder Bohrung des Verschlußdeckels hindurchgreift. Diese Auflage dichtet dann auch den Bereich der Zentrierbohrung oder dgl. ab.

Nach weiteren bevorzugten Merkmalen der Erfindung besteht diese Auflage aus dem gleichen Werkstoff wie die statischen Dichtstreifen selbst und wird gleichzeitig mit dem oder den Dichtstreifen angeformt, d.h. angegossen oder anvulkanisiert. Damit ist eine rationelle Fertigung gewährleistet.

Weil aufgrund von Fertigungstoleranzen nicht immer gewährleistet ist, daß die Auflage im montierten Zustand ohne Versatz zur Bohrung zu liegen kommt, was zu Beeinträchtigungen der Dichtwirkung führen kann, wird nach einem weiteren Merkmal der Erfindung vorgeschlagen, diese Auflage auf der dem Motorgehäuse oder dgl. zugewandten Seite kalottenförmig auszubilden. Bei dieser Ausführung drücken sich die balligen Ränder der Kalotte in die Austrittskante der Bohrung ein. Selbst bei Form- und Lagetoleranzen, d.h. z.B. bei einem Versatz der Kalotte zur Zentrierbohrung, läßt sich eine ausgezeichnete Dichtwirkung erzielen.

Ein Ausführungsbeispiel der Erfindung ist in den beiliegenden Zeichnungen dargestellt.

Es zeigen:

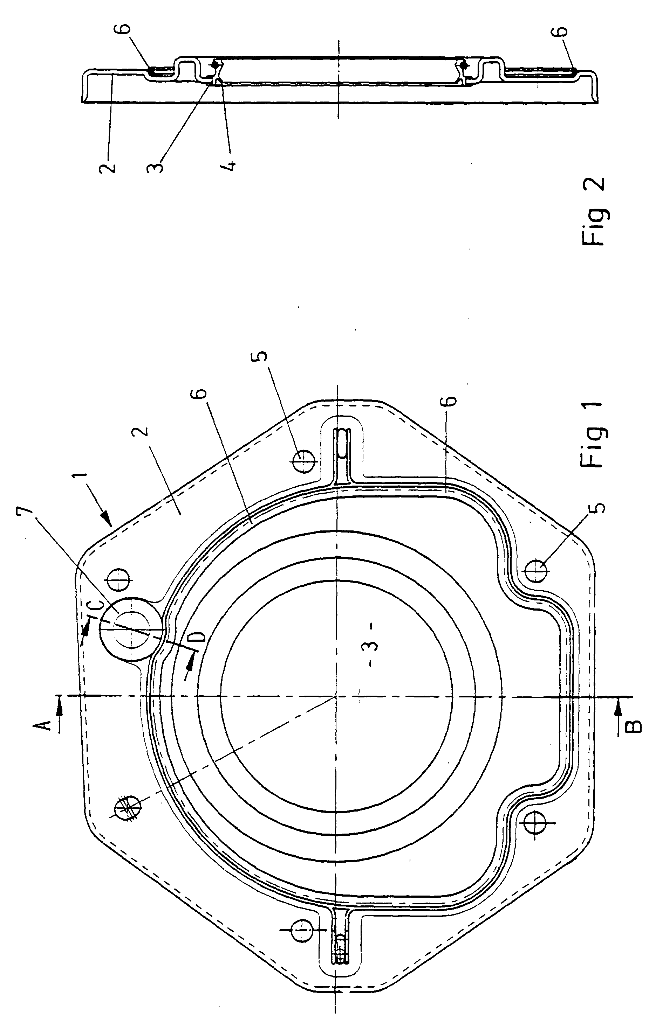

- Figur 1: eine Ansicht des Verschlußdeckels auf die im eingebauten Zustand dem Motorgehäuse zugewandte Seite,
- Figur 2: einen Schnitt durch den Verschlußdeckel gemäß Linie A-B nach Figur 1 und

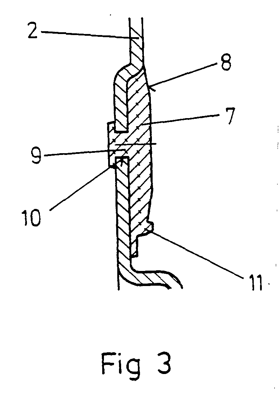

- Figur 3: einen Schnitt durch den Verschlußdeckel gemäß Linie C-D nach Figur 1.

Der Verschlußdeckel 1 besteht aus einem topfförmig gezogenen Blechkörper 2 mit einer zentralen Bohrung 3 zur Aufnahme einer Wellendichtung 4, die die den Verschlußdeckel 1 durchgreifende - nicht dargestellte - Kurbelwelle abdichtet, sowie mehreren am Umfang verteilten Bohrungen 5, die zur Aufnahme von Befestigungsschrauben zur Befestigung des Verschlußdeckels 1 am - nicht dargestellten - Motorgehäuse dienen. Um die Kontaktfläche des Verschlußdeckels 1 mit dem Motorgehäuse abzudichten, sind auf der dem Motorgehäuse zugewandten Seite des Verschlußdeckels 1 um die zentrale Bohrung 3 herumlaufende statische Dichtstreifen 6 aus elastomerem Werkstoff vorgesehen. In dem Bereich, der der Zentrierbohrung des - nicht dargestellten - Motorgehäuses gegenüberliegt, ist der Blechkörper 2 mit einer Auflage 7 versehen, die mit ihrer kalottenförmig ausgebildeten Stirnfläche 8 über den Blechkörper 2 vorsteht. Die kalottenförmige Auflage 7 ist mit einem Ansatz 9, der durch eine entsprechende Bohrung 10 im Blechkörper 2 hindurchgreift, versehen, wobei der Ansatz 9 die Auflage fixiert. Zur besseren Verankerung der Auflage 7 ist also der Verschlußdeckel 1 in diesem Bereich mit einer Ausnehmung oder Bohrung 10 versehen, durch die ein Ansatz 9 der Auflage 7 hindurchgreift. Die Auflage wird dann von der Rückseite her angegosssen oder angespritzt. Diese Lösung hat weiterhin den Vorteil, daß der Werkstoff der Auflage, der vorzugsweise der gleiche wie der für die Dichtstreifen 6 ist, von der Rückseite des Blechkörpers her angespritzt oder angegossen werden kann. Sowohl die Dichtstreifen 6 als auch die Auflage 7 können in einem Arbeitsgang angeformt werden. Zur Verbesserung der Dichtwirkung kann die Auflage 7 mindestens im Bereich des Dichtstreifens 6 mit einer Dichtlippe 11 versehen sein.

## Patentansprüche

1. Kombination eines Verschlußdeckels mit einem Gehäuse mit durch den Deckel sich erstreckender Welle, insbesondere für Motor- und Getriebegehäuse bei Kraftfahrzeugen, mit einer dynamisch wirkenden Dichtung für die Welle und einer statisch wirkenden Dichtung für die Deckelflanschfläche, wobei im Bereich von Bohrungen oder dgl. des abzudichtenden Gehäuses auf der dem Gehäuse zugewandten Stirnseite des Verschlußdeckels (1) eine oder mehrere aus Dichtmaterial bestehende, über den Verschlußdeckel (1) vorstehende Auflagen (7) vorgesehen sind, dadurch gekennzeichnet, daß die Auflage (7) auf der Rückseite einen Ansatz (9) aufweist, der durch eine entsprechende Ausnehmung oder Bohrung (10) des Verschlußdeckels (1) hindurchgreift.

2. Verschlußdeckel nach Anspruch 1, dadurch gekennzeichnet, daß die Auflage (7) aus dem gleichen Werkstoff wie die statischen Dichtstreifen (6) gefertigt ist.

3. Verschlußdeckel nach einem der Ansprüche 1 oder 2, dadurch gekennzeichnet, daß die Auflage (7) gleichzeitig mit den statischen Dichtstreifen (6) angeformt ist.

4. Verschlußdeckel nach einem der Ansprüche 1 bis 3, dadurch gekennzeichnet, daß die Auflage (7) auf ihrer dem Gehäuse zugewandten Stirnseite (8) kalottenförmig ausgebildet ist.

5. Verschlußdeckel nach einem der Ansprüche 1 bis 4, dadurch gekennzeichnet, daß die kalottenförmig ausgebildete Stirnseite (8) der Auflage (7) mindestens im Bereich der statischen Dichtstreifen (6) mit einer Dichtlippe (10) versehen ist.

## Claims

1. A combination of a sealing cover with a housing having a shaft extending through the cover, in particular for engine and transmission housings in motor vehicles, with a dynamically acting seal for the shaft and a statically acting seal for the cover flange face, wherein in the vicinity of bores or the like in the housing to be sealed on the end face of the sealing cover (1) facing the housing there are provided one or more supports (7) consisting of sealing material and projecting over the sealing cover (1), characterised in that on its rear side the support (7) has an extension (9) which engages through a corresponding recess or bore (10) in the sealing cover (1).

2. A sealing cover according to Claim 1, characterised in that the support (7) is made of the same material as the static sealing strips (6).

3. A sealing cover according to either Claim 1 or 2, characterised in that the support (7) is formed simultaneously with the static sealing strips (6).

4. A sealing cover according to any one of Claims 1 to 3, characterised in that the support (7) is spherically shaped on its end face (8) facing the housing.

5. A sealing cover according to any one of Claims 1 to 4, characterised in that the spherically shaped end face (8) of the support (7) is provided with a sealing lip (11) at least in the vicinity of the static sealing strips (6).

## Revendications

1. Combinaison d'un couvercle de fermeture et d'un carter avec un arbre traversant le couvercle, en particulier pour des carters de moteurs ou de transmissions pour véhicules automobiles, comprenant un joint d'étanchéité dynamique pour l'arbre et un joint d'étanchéité statique pour la surface de bride du couvercle, un ou plusieurs éléments d'appui (7) en matériau d'étanchéité étant prévus sur le couvercle de fermeture (1) dans la zone de trous ou de parties analogues du carter à fermer de façon étanche, en saillie sur le côté frontal du couvercle de fermeture (1) tourné vers le carter, caractérisée par le fait que l'élément d'appui (7) présente sur le côté arrière un appendice (9) qui traverse un évidement ou trou (10) correspondant du couvercle de fermeture (1).

2. Couvercle de fermeture suivant la revendication 1, caractérisé par le fait que l'élément d'appui (7) est constitué par le même matériau que les bandes d'étanchéité statique (6).

3. Couvercle de fermeture suivant l'une des revendications 1 ou 2, caractérisé par le fait que l'élément d'appui (7) est formé sur le couvercle simultanément avec les bandes d'étanchéité statique (6).

4. Couvercle de fermeture suivant l'une des revendications 1 à 3, caractérisé par le fait que l'élément d'appui (7) est conformé en calotte sur son côté frontal (8) tourné vers le carters.

5. Couvercle de fermeture suivant l'une des revendications 1 à 4, caractérisé par le fait que l'élément d'appui (7) est muni, sur son côté frontal (8) en forme de calotte, d'une lèvre d'étanchéité (10) au moins dans la zone des bandes d'étanchéité statique (6).
